# EUROPÄISCHE PATENTSCHRIFT

(11) **EP 0 785 316 B1**
(45) Veröffentlichungstag und Bekanntmachung des Hinweises auf die Patenterteilung: **28.02.2001**
(21) Anmeldenummer: 96115706.2
(22) Anmeldetag: 01.10.1996
(51) Int. Cl.: E03F 5/04

(54) **Bodenablauf mit herausnehmbarer Geruchverschlussglocke**
Floor drain with a removable bell siphon
Bouche d'égout avec siphon en cloche amovible

(30) Priorität: 28.10.1995 DE 29517090 U
(43) Veröffentlichungstag der Anmeldung: 23.07.1997
(73) Patentinhaber: PASSAVANT - ROEDIGER UMWELTTECHNIK GmbH, 65322 Aarbergen (DE)
(72) Erfinder: Emmel, Klaus, 56370 Rettert (DE)

(56) Entgegenhaltungen:
- DE-A- 3 021 752
- DE-A- 4 411 492
- DE-A- 4 443 873

## Beschreibung

**Die Erfindung** betrifft einen Bodenablauf üblicher Bauart **mit einem, Geruchverschluß, der vor eine in einem Bodenteil vorgesehenen Auslauföffnung gesetzt und dort durch einen Dichtring abgedichtet ist und der eine zum flachen Bodenteil hin heruntergezogene, in das Sperrwasser eintauchende Schürze enthält**.

Bodenabläufe gibt es, **wie in der nicht vorveröffentlichten DE-A-44 43 873 beschrieben**, in zwei Winkellagen der abgehenden Abflußleitung, und zwar mit senkrechtem Abgang (90°) oder waagerechtem Abgang (1,5°). Für diese beiden Ausführungen wurden durchweg getrennte Modelle angeboten. Um den Fertigungs- und Lageraufwand zu verringern, wurde vorgeschlagen, das Bodenablaufgehäuse mit einem unter etwa 45° verlaufenden schrägen Bodenteil zu versehen und in dieses Bodenteil die Ablauföffnung zu legen. Der Ablaufrohrstutzen kann an dieses für beide Abgänge gleiche Gehäuse unter der gewünschten Winkellage angesetzt werden.

Es wurde auch schon vorgeschlagen, **wie in der als nächstliegenden Stand der Technik anzusehenden DE-A-44 11 492 aufgeführt**, den Ablaufrohrstutzen mit einem Flansch zu versehen, so daß es nur noch eine Universalausführung für beide Abgangswinkel gibt. Der Aufwand für die mit einer Dichtung zu versehende Flanschverbindung ist aber zu hoch.

Der Vorschlag, das Bodenablaufgehäuse mit zwei Ablaufrohrstutzen zu versehen, von denen der jeweils nicht benutzte mit einem Stopfen verschlossen wird, ist noch aufwendiger (DE 30 05 070). Dasselbe gilt für die bekannten Ausführungen mit einem Kugelgelenk im Ablaufrohrstutzen (DE 40 00 102).

Es stellte sich daher die Aufgabe, den Bodenablauf wesentlich zu vereinfachen und dabei so umzubilden, daß sich eine gedrängte niedrige Bauart ergibt, in der gleichwohl ein Schmutzfangeimer Platz hat. Diese Aufgabe wird nunmehr dadurch gelöst, daß die Unterkante der Auslauföffnung um das die Sperrwasserhöhe ergebende Maß über der Unterkante der Schürze liegt und daß die Glocke zumindest in ihrem über dem Sperrwasser liegenden oberen Abschnitt etwa parallel zum die Auslauföffnung enthaltenden schrägen Bodenteil verläuft. An dem schrägen Bodenteil des Ablaufgehäuses kann der unter einem Winkel von ca. 45° abgeschnittene Ablaufrohrstutzen in der gewünschten Winkellage (90° oder 1,5°) angesetzt werden. Innen ist durch den schrägen Verlauf des oberen Abschnittes der Glocke ausreichend Platz für einen entsprechend geformten Schmutzfangeimer geschaffen. Der Glockengeruchverschluß ist auch insofern einfacher aufgebaut, als eine hochgezogene Überfallkante, die die Sperrwasserhöhe im Ablauf einstellt, ganz fortgefallen ist. Die im schrägen Bodenteil hochgelegte Ablauföffnung bildet nun die Überfallkante. Ein Verlust an Sperrwasserhöhe ist damit nicht verbunden.

Es ist besonders vorteilhaft, wenn in Ausgestaltung der Neuerung die Geruchverschlußglocke eine parallel zum schrägen Bodenteil verlaufende Grundplatte erhält, die die mit der Ablauföffnung korrespondierende Durchflußöffnung enthält. Die Glocke und die Schürze schließen sich an diese Grundplatte an. Die Dichtung, die die Durchflußöffnung umgibt, ist vorzugsweise als Steckprofil ausgebildet, das über den Rand der Öffnung gesteckt wird. Zusätzliche Befestigungsmittel für die Dichtung sind dann nicht nötig.

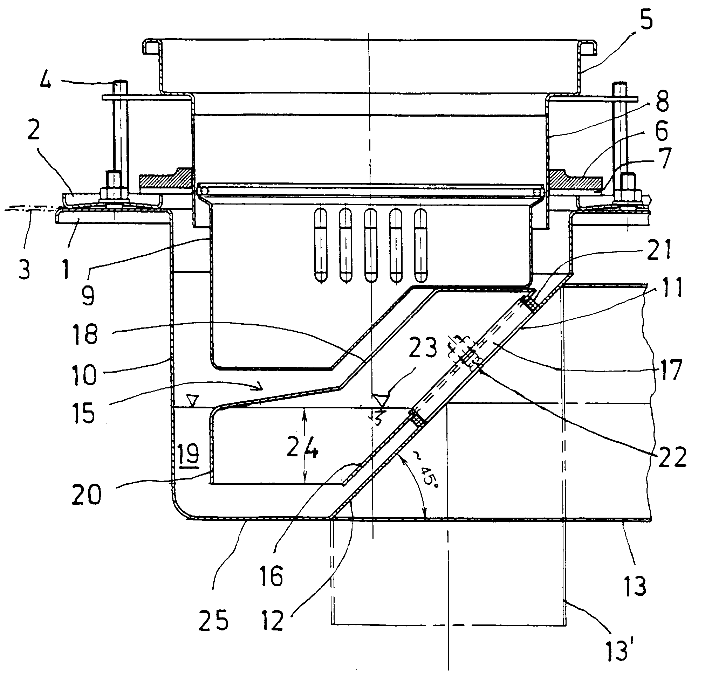

Ein bevorzugtes Ausführungsbeispiel eines neuerungsgemäßen Bodenablaufes ist in der Abbildung im vertikalen Achsenschnitt dargestellt. Es handelt sich um einen Bodenablauf, der mit einem Klemmflansch 1, 2 zum dichtenden Ansetzen einer Feuchtigkeitssperre 3 und einem in der Höhe (mittels Stellfüße 4) auf den Bodenbelag (nicht dargestellt) einstellbaren Aufsatzstück 5 ausgerüstet ist. Das über die Feuchtigkeitssperre ablaufende Sickerwasser wird über die im Stützring 6 vorhandenen Schlitze 7 in den Ablauf abgeführt.

In den Kragen 8 des Aufsatzstückes 5 ist ein unten stufig abgesetzter Schmutzfangeimer 9 eingehängt. Sein Oberrand liegt am Kragen an.

Der Boden des Ablaufgehäuses ist in dem die Auslauföffnung 11 enthaltenden Abschnitt 12 unter etwa 45° geneigt. Dort kann von außen der Ablaufrohrstutzen 13 in einer der beiden Winkelstellungen 13 angeschweißt werden.

Der ausbaubar eingesetzte Glockengeruchverschluß 15 besteht aus einer, dem schrägen Bodenteil 12 zugewandten Grundplatte 16 mit Durchlauföffnung 17, der eigentlichen Glocke 18 und der in das Sperrwasser 19 eintauchenden Schürze 20. Glocke und Schürze sind dicht an die Grundplatte angeschlossen. Über den Rand der Durchlauföffnung 17 ist der Dichtring 21 gesteckt, der oben ein Nutprofil mit die Grundplatte übergreifender Lippe enthält. Zur lösbaren Befestigung des Geruchverschlußteils an dem schrägen Bodenteil sind zwei Gewindestifte 22 auf beiden Seiten neben der Ablauföffnung vorgesehen. Das Geruchverschlußteil besitzt auf beiden Seiten gabelförmige Vorsprünge, die um die Gewindestifte greifen.

Im Betrieb gibt die Unterkante der Durchflußöffnung 17 den Wasserspiegel 23 im Gehäuse vor. In diesen Spiegel taucht die Schürze 20 um die Sperrwasserhöhe 24 ein. An der unteren Durchflußöffnung des Geruchverschlußteils ist der Bodenteil 25 flach ausgebildet. Die Abflachung der Schürze und der geneigte Verlauf der anschließenden Glockenwand ergeben einen Raum, in dem der Schmutzfangeimer 9 ausreichend Platz findet. Nach dem Herausnehmen des Eimers und des Geruchverschlußteils ist die Ablaufleitung für Reinigungsarbeiten frei zugänglich. Das Ablaufgehäuse kann ebenfalls gesäubert werden.

## Patentansprüche

1. Bodenablauf mit einem Geruchverschluß, der vor eine in einem unter einem Winkel von etwa 45° verlaufenden Bodenteil (12) vorgesehene Auslauföffnung (11) gesetzt und dort durch einen Dichtring (21) abgedichtet ist und der eine zum flachen Bodenteil (25) hin heruntergezogene, in das Sperrwasser um das Maß der Sperrwasserhöhe (24) eintauchende Schürze enthält, **dadurch gekennzeichnet**, daß als Geruchverschluß eine zum Zugänglichmachen des Ablaufrohrstutzens (13, 13') ausbaubare Geruchverschlußglocke (15) vorgesehen ist, die besteht aus einer dem schrägen Bodenteil (12) zugewandten Grundplatte (16) mit Durchlauföffnung (17), der eigentlichen Glocke (18) und einer Schürze (20), die an der Grundplatte angeschlossen sind, und daß die Unterkante der Auslauföffnung (11) um das die Sperrwasserhöhe (24) ergebende Maß über der Unterkante der Schürze (20) liegt, und daß die eigentliche Glocke (18) zumindest in ihrem über dem Sperrwasser liegenden oberen Abschnitt etwa parallel zum schrägen Bodenteil (12) verläuft.

2. Bodenablauf nach Anspruch 1, **dadurch gekennzeichnet**, daß der die zugehörige Durchflußöffnung (17) in der Grundplatte (16) umgebende Dichtring (21) als Steckprofilring ausgebildet ist.

3. Bodenablauf nach Anspruch 1 oder 2, **dadurch gekennzeichnet**, daß die Geruchverschlußglocke (15) mit zwei neben der Auslauföffnung (11) liegenden Schrauben (22) an dem schrägen Bodenteil (12) befestigt ist.

## Claims

1. Floor drain provided with an expandable bell mouthed stench trap (15) to allow access to the discharge pipe connection (13) which is placed in front of the discharge opening (11) provided in the bottom part (12) being inclined at an angle of approx. 45° and which is sealed there with a sealing ring (21), and including a chute (20) immerging into the sealing water (19), at the flat bottom part (25), by the equivalent of the sealing water depth (24), **characterized in that** the lower edge of the discharge opening (11) is located above the lower edge of the chute by exactly the equivalent of the sealing water depth (24) and that the bell-shaped top (18), at least its upper part which is located above the sealing water, is mostly parallel to the inclined bottom part (12) including the discharge opening (11).

2. Floor drain according to claim 1, **characterized in that** the bell mouthed stench trap (15) includes a base plate (16) which is parallel to the inclined bottom part (12), and to which the bell-shaped top (18) and the chute (20) are connected.

3. Floor drain according to the claims 1 or 2, **characterized in that** the sealing ring (21) for the discharge opening (17) in the base plate (16) is formed as profiled plug-in ring.

4. Floor drain according to the claims 1, 2 or 3, **characterized in that** the bell mouthed stench trap (15) is attached to the inclined bottom part (12) by two screws (22) next to the discharge opening (11).

## Revendications

1. Avaloir du plancher équipé d'une obturation hydraulique extensible en forme de cloche (15) permettant l'accès à la tubulure de décharge (13) laquelle est située devant l'ouverture de décharge (11) pourvue dans la partie du fond (12) étant inclinée à un angle d'env. 45° et laquelle est rendue étanche là-bas par un joint torique d'étanchéité (21), et incluyant un tablier (20) immergeant dans l'eau d'intercepteur hydraulique (19), vers la partie du fond plate (25), par l'équivalent de la profondeur de l'eau d'intercepteur (24), caractérisé e n c e q u e le bord inférieur de l'ouverture de décharge (11) se trouve au-dessus du bord inférieur du tablier à une distance qui est équivalente à la profondeur de l'eau d'intercepteur hydraulique (24) et que la cloche (18), au moyen la partie supérieure se trouvant au-dessus de l'eau d'intercepteur hydraulique, est à peu près parallèle à la partie du fond inclinée (12) comprenant l'ouverture de décharge (11).

2. Avaloir du plancher selon revendication 1, **caractérisé en ce que** l'obturation hydraulique en forme de cloche (15) comprend une plaque de base (16), étant parallèle à la partie du fond inclinée (12), à laquelle la cloche (18) et le tablier (20) sont attachés.

3. Avaloir du plancher selon une des revendications 1 ou 2, **caractérisé en ce que** le joint torique d'étanchéité (21) pour l'ouverture de décharge (17) dans la plaque de base (16) est formé comme joint d'étanchéité profilé enfichable.

4. Avaloir du plancher selon les revendications 1, 2 ou 3, **caractérisé en ce que** l'obturation hydraulique en forme de cloche (15) est attachée à la partie du fond inclinée (12) par deux vis (22) se trouvant auprès de l'ouverture de décharge (11).
